# EUROPEAN PATENT SPECIFICATION

(11) **EP 3 358 644 B1**
(45) Date of publication and mention of the grant of the patent: **11.09.2019**
(21) Application number: 17154597.3
(22) Date of filing: 03.02.2017
(51) Int. Cl.: H01M 10/42, H01M 2/10, H01M 2/20, H01M 2/30

(54) **BATTERY CELL AND BATTERY MODULE**
BATTERIEZELLE UND BATTERIEMODUL
CELLULE DE BATTERIE ET MODULE DE BATTERIE

(43) Date of publication of application: 08.08.2018
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: Kitano, Shinya, 70174 Stuttgart (DE)
(74) Representative: Isarpatent

(56) References cited:
- US-A1- 2005 014 036
- US-A1- 2011 200 858
- US-A1- 2014 205 888

## Description

The present invention relates to a battery cell and a battery module and a corresponding usage.

US 2014/205888 A1 discloses a battery model for electric vehicles composed of in series electrically connected battery cells. Each battery cell has a housing and an electrode assembly, a negative terminal protruding from the housing, a positive terminal protruding from the housing, whereby both terminals protrude in parallel along the direction x from the same side of the housing and are joined to four connection segments for the terminal that are bent to each other and form a positive and a negative connector with prismatic shape.

US 2005/014036 A1 discloses a battery cell comprising a housing, a positive terminal and a negative terminal, both protruding from the case on the same side. The portions of the positive and negative tabs that extend out of the case are bent and form four segments clamp-like connectors having a prismatic shape and apertures in order to hold and protect a circuit board that is able to prevent the battery from overcharging.

### State of the Art

Electrical energy can be stored by means of batteries. Batteries change chemical energy into electrical energy. Particularly, rechargeable batteries are known that can be charged and discharged several times. Batteries or battery modules comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

A battery cell has a positive electrode called cathode and a negative electrode called anode. The anode and the cathode are separated from one another by means of a separator. The electrodes of the battery cell are formed like foils and are wound with interposition of the separator to form an electrode roll, also referred to as jelly-roll. Alternatively, the electrodes can be layered to form an electrode stack.

The electrodes of the battery cell are connected to terminals of the battery cell. The electrodes of the battery cell are arranged within a housing. The terminals protrude from said housing. The battery cell can be charged and discharged by means of the terminals. For connecting several battery cells electrically in series or in parallel, the terminals of the battery cells are connected to respective connector elements.

Document DE 10 2013 225 340 A1 discloses a battery module with a plurality of battery cells. Each battery cell comprises a housing, a negative terminal protruding from the housing and a positive terminal protruding from the housing. The terminals contain contact segments. By means of said contact element and additional connector elements the battery cells are connected electrically to form the battery module.

Document DE 10 2012 223 812 A1 discloses a battery cell having terminals. The terminals are formed as flat metal stripes protruding from a housing of the battery cell. The cell terminals contain several segments arranged one behind the other that are orientated inclined relatively to one another. For electrical connection of battery cells, the terminals are welded to connector elements.

Document DE 10 2014 212 264 A1 discloses a connector element for battery cells. The connector element comprises a bracket element having several segments that are arranged inclined to one another. Said segments receive terminals of battery cells. The bracket element extends over several terminals of several battery cells and thereby connects said terminals electrically with each other.

Document DE 10 2013 203 094 A1 discloses a battery cell having a metallic housing. The metallic housing comprises two parts that are electrically insulated by means of an insulator. Said parts of the housing define the terminals of the battery cell. For electrical connection of several battery cells, the parts of the housing are connected by pressure contact.

Document DE 10 2014 210 390 A1 shows battery cells having different kinds of housings. Inter alia, a battery cell in form of a pouch cell is shown. Said pouch cell has a prismatic shape and the housing is formed of a soft material, in particular of an aluminium foil.

### Disclosure of the Invention

The invention refers to a battery cell as defined in independent claims 1 and 2, comprising a housing, a negative terminal protruding from the housing and a positive terminal protruding from the housing. Thereat, negative contact segments are joined to the negative terminal, and positive contact segments are joined to the positive terminal. The battery cell further comprises two electrodes, that means an anode and a cathode, that are arranged within the housing of the battery cell and that are electrically connected to the terminals.

According to the invention, the negative contact segments are bent relatively to each other and relatively to the negative terminal as to form a negative cell connector having a prismatic shape. Hence, the negative contact segments and the negative terminal define lateral surfaces of the negative cell connector. Thus, the negative cell connector is electrically connected to the anode of the battery cell.

According to the invention, the positive contact segments are bent relatively to each other and relatively to the positive terminal as to form a positive cell connector having a prismatic shape. Hence, the positive contact segments and the positive terminal define lateral surfaces of the positive cell connector. Thus, the positive cell connector is electrically connected to the cathode of the battery cell.

According to a preferred embodiment of the invention, the negative cell connector comprises the negative terminal and exactly three negative contact segments. Thereat, each negative contact segment is bent perpendicular relatively to the adjacent negative contact segment, respectively to the negative terminal. Hence, four lateral surfaces of the negative cell connector are formed by the negative contact segments and the negative terminal, and two lateral surfaces of the negative cell connector remain open.

According to a preferred embodiment of the invention, the positive cell connector comprises the positive terminal and exactly three positive contact segments. Thereat, each positive contact segment is bent perpendicular relatively to the adjacent positive contact segment, respectively to the positive terminal. Hence, four lateral surfaces of the positive cell connector are formed by the positive contact segments and the positive terminal, and two lateral surfaces of the positive cell connector remain open.

According to a further advantageous embodiment of the invention, at least one side of the negative cell connector is free of negative contact segments and defines a negative aperture. Also, at least one side of the positive cell connector is free of positive contact segments and defines a positive aperture. Said apertures face each other and are oriented perpendicular to the transverse direction.

Advantageously, a circuit element is inserted into the negative aperture and into the positive aperture and is electrically connected to the negative cell connector and to the positive cell connector. Hence, said circuit element fills the gap formed between the negative cell connector and the positive cell connector and does not require any additional space.

According to a preferred embodiment of the invention, the circuit element inserted into the negative aperture and into the positive aperture is a fast discharging device. However, the circuit element could also contain sensors or other switching elements.

Furthermore, a battery module is proposed that comprises at least two battery cells according to the invention. Thereat, at least one cell connector of one battery cell is connected non-positively by pressure contact to at least one cell connector of another battery cell. Thereby, the battery cells are electrically connected in series or in parallel.

A battery cell according to the invention as well as a battery module according to the invention is usable advantageously in particular in an electric vehicle (EV), in a hybrid electric vehicle (HEV) or in a plug-in hybrid vehicle (PHEV).

### Advantages of the Invention

The invention allows connecting several battery cells to battery modules without using separate bus bars or connector elements. Hence, space can be saved and volume occupancy can be improved. Furthermore, battery cells can be connected non-positively, in particular by pressure contact. Hence, complex and expensive ways of connecting like screwing or welding are not necessary. The invention can be applied to battery cells of pouch type as well as to battery cells having a hard housing.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view at a battery cell,
- Figure 2: a perspective view at a battery cell without contact segments,
- Figure 3: a perspective view at a battery cell with contact segments before bending,
- Figure 4: a perspective view at the terminals and the contact segments shown in figure 3 partly bent,
- Figure 5: a perspective view at the terminals and the contact segments shown in figure 4 further bent,
- Figure 6: a perspective view at a complete battery cell,
- Figure 7: a perspective view at a battery module according to a first embodiment,
- Figure 8: a perspective view at a battery module according to a second embodiment and
- Figure 9: a perspective view at a battery module according to a third embodiment.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

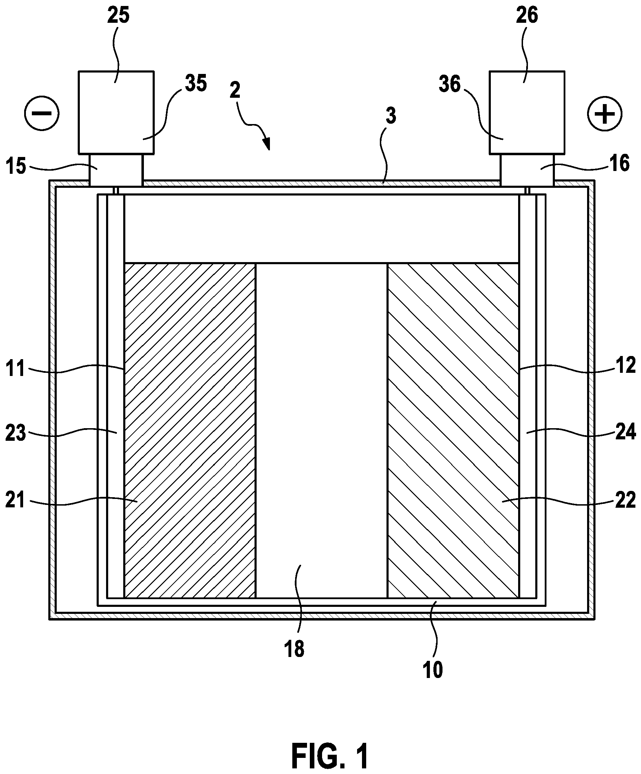

Figure 1 shows a schematic view at a battery cell 2. The battery cell 2 contains a housing 3 which is of pouch type and which has a prismatic shape. The battery cell 2 further contains an electrode assembly 10, which is arranged within the housing 3. The housing 3 is a bag or a pouch made of a soft material that surrounds the electrode assembly 10.

Furthermore, the battery cell 2 contains a negative terminal 15 and a positive terminal 16. The terminals 15, 16 serve for charging and discharging the battery cell 2. The terminals 15, 16 protrude from the housing 3. Negative contact segments 25 are joined to the negative terminal 15. Thereat, the negative contact segments 25 and the negative terminal 15 form a negative cell connector 35. Positive contact segments 26 are joined to the positive terminal 16. Thereat, the positive contact segments 26 and the positive terminal 16 form a positive cell connector 36.

The electrode assembly 10 contains an anode 11, a cathode 12 and a separator 18 that is arranged between the anode 11 and the cathode 12. Presently, the electrode assembly 10 is shaped as an electrode stack. That means the anode 11 and the cathode 12 of the electrode assembly 10 consist of several flat foils that are stacked alternately to form a pile or a stack. The separator 18 also consists of several flat foils that are stacked between the foils of the anode 11 and the foils of the cathode 12.

The electrode assembly 10 can also be shaped as a jelly roll. That means the anode 11 and the cathode 12 of the electrode assembly 10 are flat foils that are wound about an axis. The separator 18 that is also a flat foil is wound between the anode 11 and the cathode 12 about the same axis.

The anode 11 contains an anode active material 21 formed as a flat foil and an anode current collector 23 formed as a flat foil. The anode active material 21 and the anode current collector 23 are attached to one another. The anode current collector 23 is electrically conductive and is made of a metal, in particular of copper. The anode current collector 23 is electrically connected to the negative terminal 15 of the battery cell 2.

The cathode 12 contains a cathode active material 22 formed as a flat foil and a cathode current collector 24 formed as a flat foil. The cathode active material 22 and the cathode current collector 24 are attached to one another. The cathode current collector 24 is electrically conductive and is made of a metal, in particular of aluminium. The cathode current collector 24 is electrically connected to the positive terminal 16 of the battery cell 2.

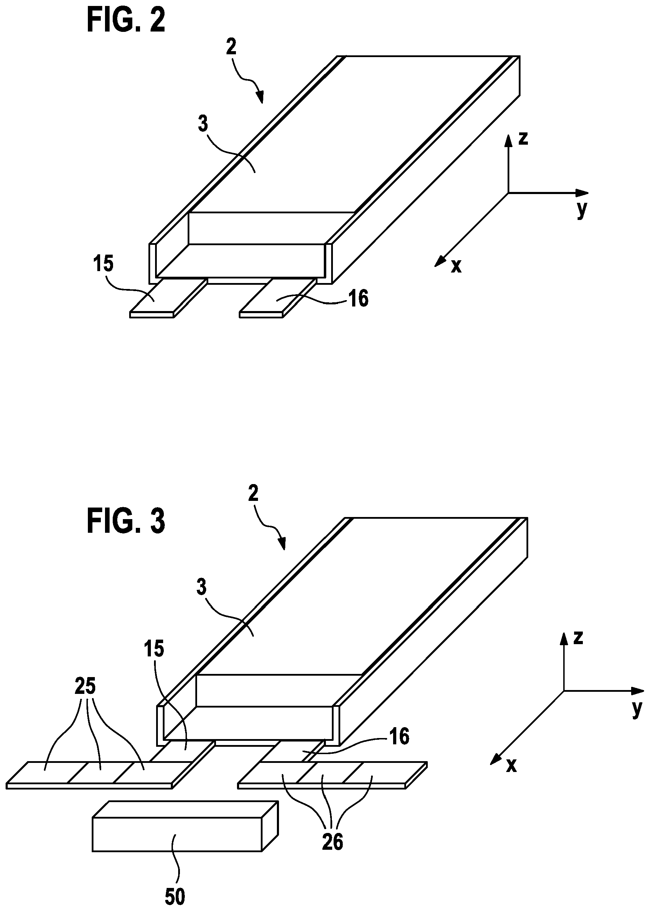

Figure 2 shows a perspective view at a battery cell 2 without contact segments 25, 26. The negative terminal 15 and the positive terminal 16 protrude from the housing 3 parallel to one another in longitudinal direction x. The negative terminal 15 and the positive terminal 16 are spaced apart in transverse direction y which is orientated perpendicular to the longitudinal direction x. A cross direction z is orientated perpendicular to the longitudinal direction x and perpendicular to the transverse direction y.

Figure 3 shows a perspective view at the battery cell 2 with negative contact segments 25 and positive contact segments 26 before bending. Thereat, exactly three negative contact segments 25 and three positive contact segments 26 are provided. Furthermore, a circuit element 50 is shown which will be electrically and mechanically connected to the battery cell 2.

Presently, the circuit element 50 is a fast discharging device. Such a discharging device permits discharging of the battery cell 2 when the discharging device is electrically connected to the terminals 15, 16 of the battery cell 2. Discharging of the battery cell 2 may be necessary in case of an error condition.

The negative contact segments 25 are welded to the negative terminal 15. The negative contact segments 25 as well as the negative terminal 15 are shaped as flat bars and extend perpendicular to the cross direction z. The positive contact segments 26 are welded to the positive terminal 16. The positive contact segments 26 as well as the positive terminal 16 are shaped as flat bars and extend perpendicular to the cross direction z.

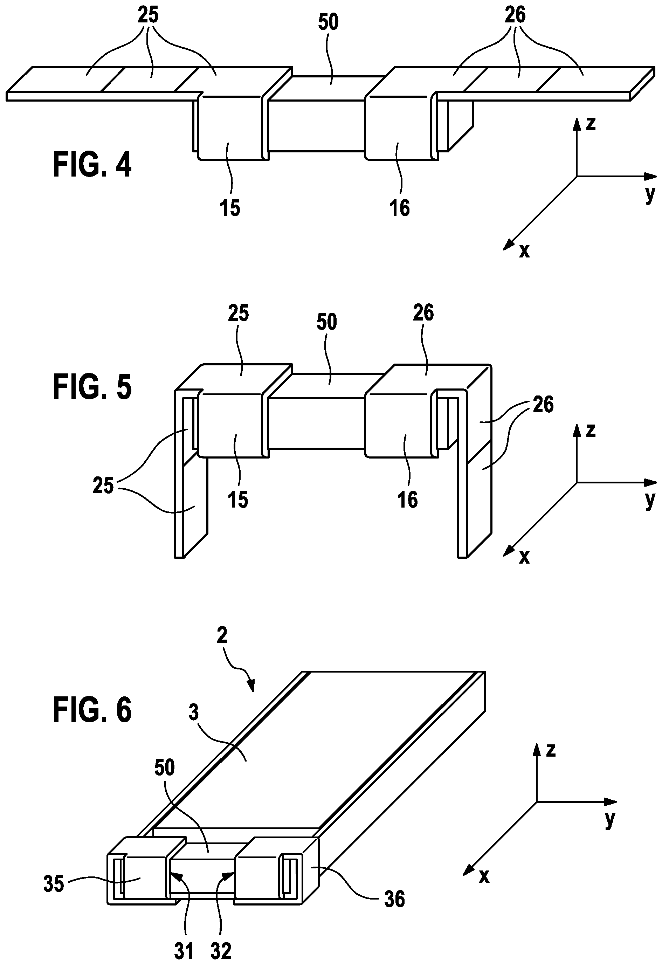

Figure 4 shows a perspective view at the negative terminal 15 and the positive terminal 16 and the negative contact segments 25 and the positive contact segments 26 shown in figure 3 partly bent. The terminals 15, 16 and the contact element 25, 26 are bent as to partly enfold the circuit element 50 which has a prismatic shape.

Thereat, the negative terminal 15 is bent as to extend perpendicular to the longitudinal direction x, and the negative contact segments 25 are bent as to extend perpendicular to the cross direction z. Furthermore, the positive terminal 16 is bent as to extend perpendicular to the longitudinal direction x, and the positive contact segments 26 are bent as to extend perpendicular to the cross direction z.

Figure 5 shows a perspective view at the negative terminal 15 and the positive terminal 16 and the negative contact segments 25 and the positive contact segments 26 shown in figure 4 further bent. The terminals 15, 16 and the contact element 25, 26 are bent as to further enfold the circuit element 50.

Thereat, the negative terminal 15 and the negative contact segment 25 adjacent to the negative terminal 15 stay in their positions shown in figure 4. The remaining two negative contact segments 25 are bent as to extend perpendicular to the transverse direction y. Also, the positive terminal 16 and the positive contact segment 26 adjacent to the positive terminal 16 stay in their positions shown in figure 4. The remaining two positive contact segments 26 are bent as to extend perpendicular to the transverse direction y.

Figure 6 shows a perspective view at a complete battery cell 2 together with the circuit element 50.

The negative contact segments 25 and the negative terminal 15 are bent relatively to each other as to form a negative cell connector 35 having a prismatic shape. Thereat, the negative cell connector 35 comprises the negative terminal 15 and the three negative contact segments 25. One side of the negative cell connector 35 which is orientated perpendicular to the transverse direction y is free of negative contact segments 25. Said side of the negative cell connector 35 defines a negative aperture 31.

The positive contact segments 26 and the positive terminal 16 are bent relatively to each other as to form a positive cell connector 36 having a prismatic shape. Thereat, the positive cell connector 36 comprises the positive terminal 16 and the three positive contact segments 26. One side of the positive cell connector 36 which is orientated perpendicular to the transverse direction y is free of positive contact segments 26. Said side of the positive cell connector 36 defines a positive aperture 32.

Thereat, the circuit element 50 is inserted into the negative aperture 31 of the negative cell connector 35 and into the positive aperture 32 of the positive cell connector 36. Hence, the circuit element 50 is electrically and mechanically connected to the negative cell connector 35 and to the positive cell connector 36 of the battery cell 2.

The negative cell connector 35 extends in cross direction z at least as much as the housing 3. Hence, the thickness of the negative cell connector 35 is at least as large as the thickness of the housing 3. Also, the positive cell connector 36 extends in cross direction z at least as much as the housing 3. Hence, the thickness of the positive cell connector 36 is at least as large as the thickness of the housing 3.

The negative cell connector 35 and the positive cell connector 36 are spaced apart in transverse direction y. Thereat, a gap is formed between the negative cell connector 35 and the positive cell connector 36. The width of the composition containing the negative cell connector 35, the gap and the positive cell connector 36 is at least as large as the width of the housing 3 of the battery cell 2. Thus, the negative cell connector 35 projects in transverse direction y at least as much as the housing 3. Also, the positive cell connector 36 projects in transverse direction y at least as much as the housing 3.

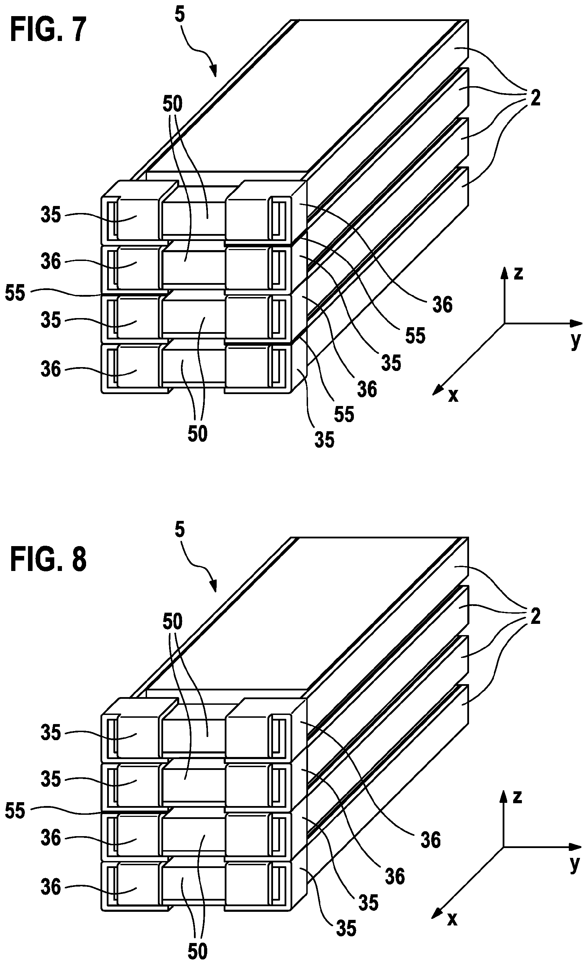

Figure 7 shows a perspective view at a battery module 5 according to a first embodiment. The battery module 5 comprises four battery cells 2 that are stacked in cross direction z. Thereat, each battery cell 2 contains a circuit element 50 which is connected to the negative cell connector 35 and to the positive cell connector 36 of the battery cell 2.

The battery cells 2 are stacked such that negative cell connectors 35 and positive cell connectors 36 are arranged alternately. Insulators 55 are inserted between certain negative cell connectors 35 and positive cell connectors 36 such that the battery cells 2 are electrically connected in series.

The cell connectors 35, 36 of the battery cells 2 are aligned in cross direction z. Thereat, the cell connectors 35, 36 are connected non-positively, in particular by pressure contact, to adjacent cell connectors 35, 36.

Figure 8 shows a perspective view at a battery module 5 according to a second embodiment. The battery module 5 comprises four battery cells 2 that are stacked in cross direction z. Thereat, each battery cell 2 contains a circuit element 50 which is connected to the negative cell connector 35 and to the positive cell connector 36 of the battery cell 2.

The battery cells 2 are stacked such that every two adjacent battery cells 2 are connected in parallel. An insulator 55 is inserted between a certain negative cell connector 35 and positive cell connector 36 such that the battery cells 2 are electrically connected in series as well as in parallel.

The cell connectors 35, 36 of the battery cells 2 are aligned in cross direction z. Thereat, the cell connectors 35, 36 are connected non-positively, in particular by pressure contact, to adjacent cell connectors 35, 36.

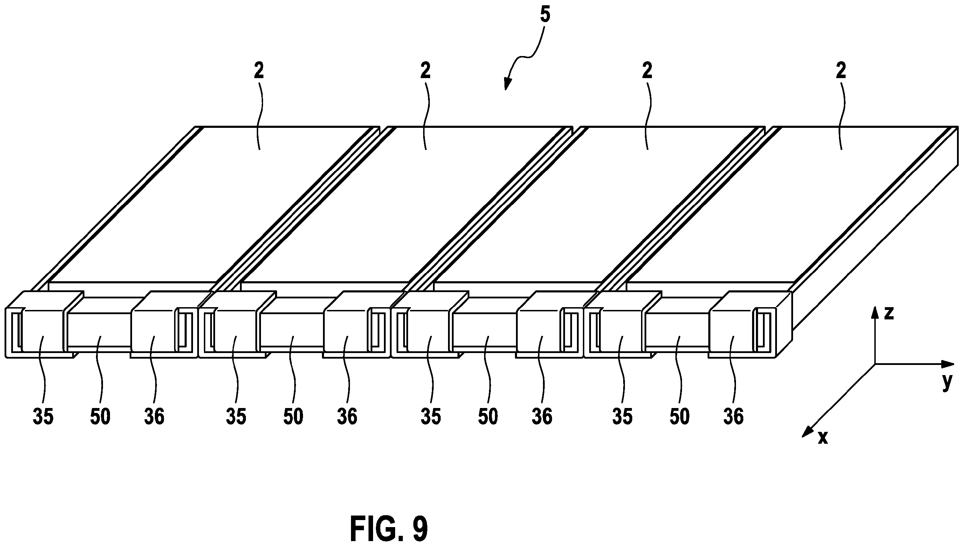

Figure 9 shows a perspective view at a battery module 5 according to a third embodiment. The battery module 5 comprises four battery cells 2 that are aligned in transverse direction y. Thereat, each battery cell 2 contains a circuit element 50 which is connected to the negative cell connector 35 and to the positive cell connector 36 of the battery cell 2.

The battery cells 2 are aligned such that every negative cell connector 35 is in contact with a positive cell connector 36. Hence, the battery cells 2 are electrically connected in series.

The cell connectors 35, 36 of the battery cells 2 are also aligned in transverse direction y. Thereat, every cell connector 35, 36 is connected non-positively, in particular by pressure contact, to the adjacent cell connector 35, 36.

The foregoing description, for purpose of explanation, has been described with reference to specific embodiments. However, the illustrative discussions above are not intended to be exhaustive or to limit the invention to the precise forms disclosed.

The embodiments were chosen and described in order to explain the principles of the invention and its practical applications, to thereby enable others skilled in the art to utilize the invention and various embodiments. The invention is set out in the appended claims.

## Claims

1. Battery cell (2), comprising a housing (3),
a negative terminal (15) protruding from the housing (3) and
a positive terminal (16) protruding from the housing (3),
negative contact segments (25) joined to the negative terminal (15) and
positive contact segments (26) joined to the positive terminal (16),
wherein the negative contact segments (25) are bent relatively to each other and relatively to the negative terminal (15) as to form a negative cell connector (35) having a prismatic shape, and that
the positive contact segments (26) are bent relatively to each other and relatively to the positive terminal (16) as to form a positive cell connector (36) having a prismatic shape;
**characterised in that**
the negative terminal (15) and the positive terminal (16) protrude parallel to one another in longitudinal direction (x) from the housing (3); and
the negative cell connector (35) and the positive cell connector (36) project in cross direction (z) which is orientated perpendicular to the longitudinal direction (x) at least as much as the housing (3).

2. Battery cell (2), comprising a housing (3),
a negative terminal (15) protruding from the housing (3) and
a positive terminal (16) protruding from the housing (3),
negative contact segments (25) joined to the negative terminal (15) and
positive contact segments (26) joined to the positive terminal (16),
wherein the negative contact segments (25) are bent relatively to each other and relatively to the negative terminal (15) as to form a negative cell connector (35) having a prismatic shape, and that
the positive contact segments (26) are bent relatively to each other and relatively to the positive terminal (16) as to form a positive cell connector (36) having a prismatic shape;
**characterised in that**
the negative terminal (15) and the positive terminal (16) protrude parallel to one another in longitudinal direction (x) from the housing (3); and
the negative cell connector (35) and the positive cell connector (36) project in transverse direction (y) which is orientated perpendicular to the longitudinal direction (x) at least as much as the housing (3).

3. Battery cell (2) according to claim 1 or 2, **characterised in that** the negative cell connector (35) comprises the negative terminal (15) and three negative contact segments (25), and that
the positive cell connector (36) comprises the positive terminal (16) and three positive contact segments (26).

4. Battery cell (2) according to one of the preceding claims, **characterised in that** at least one side of the negative cell connector (35) is free of negative contact segments (25) and defines a negative aperture (31), and that at least one side of the positive cell connector (36) is free of positive contact segments (26) and defines a positive aperture (32).

5. Battery cell (2) according to claim 4, **characterised in that** a circuit element (50) is inserted into the negative aperture (31) and into the positive aperture (32) and is electrically connected to the negative cell connector (35) and to the positive cell connector (36).

6. Battery cell (2) according to claim 5, **characterised in that** the circuit element (50) is a fast discharging device.

7. Battery module (5), comprising at least two battery cells (2) according to one of the preceding claims, whereat
at least one cell connector (35, 36) of one battery cell (2) is connected non-positively by pressure contact to at least one cell connector (35, 36) of another battery cell (2).

8. Usage of a battery cell (2) according to one of claims 1 to 6 and/or usage of a battery module (5) according to claim 7,
in an electric vehicle (EV), in a hybrid electric vehicle (HEV), in a plug-in hybrid vehicle (PHEV) or stationary.

## Patentansprüche

1. Batteriezelle (2), umfassend ein Gehäuse (3), einen aus dem Gehäuse (3) herausragenden negativen Anschluss (15) und
einen aus dem Gehäuse (3) herausragenden positiven Anschluss (16),
mit dem negativen Anschluss (15) verbundene negative Kontaktsegmente (25) und
mit dem positiven Anschluss (16) verbundene positive Kontaktsegmente (26),
wobei die negativen Kontaktsegmente (25) relativ zueinander und relativ zu dem negativen Anschluss (15) gekrümmt sind, um einen eine prismatische Form aufweisenden Verbindungsanschluss (35) der negativen Zelle zu bilden, und
die positiven Kontaktsegmente (26) relativ zueinander und relativ zu dem positiven Anschluss (16) gekrümmt sind, um einen eine prismatische Form aufweisenden Verbindungsanschluss (36) der positiven Zelle zu bilden; **dadurch gekennzeichnet, dass**
der negative Anschluss (15) und der positive Anschluss (16) parallel zueinander in Längsrichtung (x) aus dem Gehäuse (3) herausragen; und
der Verbindungsanschluss (35) der negativen Zelle und der Verbindungsanschluss (36) der positiven Zelle in Querrichtung (z), die senkrecht zu der Längsrichtung (x) ausgerichtet ist, mindestens dem Gehäuse (3) entsprechend vorspringen.

2. Batteriezelle (2), umfassend ein Gehäuse (3), einen aus dem Gehäuse (3) herausragenden negativen Anschluss (15) und
einen aus dem Gehäuse (3) herausragenden positiven Anschluss (16),
mit dem negativen Anschluss (15) verbundene negative Kontaktsegmente (25) und
mit dem positiven Anschluss (16) verbundene positive Kontaktsegmente (26),
wobei die negativen Kontaktsegmente (25) relativ zueinander und relativ zu dem negativen Anschluss (15) gekrümmt sind, um einen eine prismatische Form aufweisenden Verbindungsanschluss (35) der negativen Zelle zu bilden, und
die positiven Kontaktsegmente (26) relativ zueinander und relativ zu dem positiven Anschluss (16) gekrümmt sind, um einen eine prismatische Form aufweisenden Verbindungsanschluss (36) der positiven Zelle zu bilden; **dadurch gekennzeichnet, dass**
der negative Anschluss (15) und der positive Anschluss (16) parallel zueinander in Längsrichtung (x) aus dem Gehäuse (3) herausragen; und
der Verbindungsanschluss (35) der negativen Zelle und der Verbindungsanschluss (36) der positiven Zelle in Laufrichtung (y), die senkrecht zu der Längsrichtung (x) ausgerichtet ist, mindestens dem Gehäuse (3) entsprechend vorspringen.

3. Batteriezelle (2) nach Anspruch 1 oder 2, **dadurch gekennzeichnet, dass** der Verbindungsanschluss (35) der negativen Zelle den negativen Anschluss (15) und drei negative Kontaktsegmente (25) umfasst und dass der Verbindungsanschluss (36) der positiven Zelle den positiven Anschluss (16) und drei positive Kontaktsegmente (26) umfasst.

4. Batteriezelle (2) nach einem der vorstehenden Ansprüche, **dadurch gekennzeichnet, dass** mindestens eine Seite des Verbindungsanschlusses (35) der negativen Zelle frei von negativen Kontaktsegmenten (25) ist und eine negative Öffnung (31) definiert und dass mindestens eine Seite des Verbindungsanschlusses (36) der positiven Zelle frei von positiven Kontaktsegmenten (26) ist und eine positive Öffnung (32) definiert.

5. Batteriezelle (2) nach Anspruch 4, **dadurch gekennzeichnet, dass** ein Schaltungselement (50) in die negative Öffnung (31) und in die positive Öffnung (32) eingesetzt ist und mit dem Verbindungsanschluss (35) der negativen Zelle und dem Verbindungsanschluss (36) der positiven Zelle elektrisch verbunden ist.

6. Batteriezelle (2) nach Anspruch 5, **dadurch gekennzeichnet, dass** das Schaltungselement (50) eine Schnellentladeeinrichtung ist.

7. Batteriemodul (5), umfassend mindestens zwei Batteriezellen (2) nach einem der vorstehenden Ansprüche, wobei
mindestens ein Zell-Verbindungsanschluss (35, 36) einer Batteriezelle (2) nicht positiv mittels Druckkontakts mit mindestens einem Zell-Verbindungsanschluss (35, 36) einer anderen Batteriezelle (2) verbunden ist.

8. Verwendung einer Batteriezelle (2) nach einem der Ansprüche 1 bis 6 und/oder Verwendung eines Batteriemoduls (5) nach Anspruch 7,
in einem elektrischen Fahrzeug (EV), in einem Hybrid-Elektrofahrzeug (HEV), in einem Plug-in-Hybrid-Elektrofahrzeug (PHEV) oder stationär.

## Revendications

1. Cellule de batterie (2), comprenant :
un boîtier (3) ;
une borne négative (15) faisant saillie par rapport au boîtier (3) ; et
une borne positive (16) faisant saillie par rapport au boîtier (3) ;
des segments de contact négatifs (25) joints à la borne négative (15) ; et
des segments de contact positifs (26) joints à la borne positive (16),
les segments de contact négatifs (25) étant pliés les uns par rapport aux autres et par rapport à la borne négative (15) de manière à former un connecteur de cellule négatif (35) ayant une forme prismatique, et
les segments de contact positifs (26) étant pliés les uns par rapport aux autres et par rapport à la borne positive (16) de manière à former un connecteur de cellule positif (36) ayant une forme prismatique ;
la cellule de batterie étant **caractérisée en ce que** :
la borne négative (15) et la borne positive (16) font saillie parallèlement l'une par rapport à l'autre en direction longitudinale (x) par rapport au boîtier (3) ; et
le connecteur de cellule négatif (35) et le connecteur de cellule positif (36) se projettent en direction perpendiculaire (z), qui est orientée perpendiculairement à la direction longitudinale (x) au moins autant que le boîtier (3) .

2. Cellule de batterie (2), comprenant :
un boîtier (3) ;
une borne négative (15) faisant saillie par rapport au boîtier (3) ; et
une borne positive (16) faisant saillie par rapport au boîtier (3) ;
des segments de contact négatifs (25) joints à la borne négative (15) ; et
des segments de contact positifs (26) joints à la borne positive (16),
les segments de contact négatifs (25) étant pliés les uns par rapport aux autres et par rapport à la borne négative (15) de manière à former un connecteur de cellule négatif (35) ayant une forme prismatique, et
les segments de contact positifs (26) étant pliés les uns par rapport aux autres et par rapport à la borne positive (16) de manière à former un connecteur de cellule positif (36) ayant une forme prismatique ;
la cellule de batterie étant **caractérisée en ce que** :
la borne négative (15) et la borne positive (16) font saillie parallèlement l'une par rapport à l'autre en direction longitudinale (x) par rapport au boîtier (3) ; et
le connecteur de cellule négatif (35) et le connecteur de cellule positif (36) se projettent en direction transversale (y), qui est orientée perpendiculairement à la direction longitudinale (x) au moins autant que le boîtier (3) .

3. Cellule de batterie (2) selon la revendication 1 ou 2, **caractérisée en ce que** :
le connecteur de cellule négatif (35) comprend la borne négative (15) et trois segments de contact négatifs (25) ; et
le connecteur de cellule positif (36) comprend la borne positive (16) et trois segments de contact positifs (26) .

4. Cellule de batterie (2) selon l'une quelconque des revendications précédentes, **caractérisée en ce que** :
au moins un côté du connecteur de cellule négatif (35) est libre de segments de contact négatifs (25) et définit une ouverture négative (31) ; et
au moins un côté du connecteur de cellule positif (36) est libre de segments de contact positifs (26) et définit une ouverture positive (32).

5. Cellule de batterie (2) selon la revendication 4, **caractérisée en ce que** :
un élément de circuit (50) est inséré dans l'ouverture négative (31) et dans l'ouverture positive (32) et connecté électriquement au connecteur de cellule négatif (35) et au connecteur de cellule positif (36) .

6. Cellule de batterie (2) selon la revendication 5, **caractérisée en ce que** :
l'élément de circuit (50) est un dispositif de déchargement rapide.

7. Module de batterie (5), comprenant au moins deux cellules de batterie (2) selon l'une quelconque des revendications précédentes, et dans lequel :
au moins un connecteur de cellule de batterie (35, 36) d'une cellule de batterie (2) est connecté non positivement par contact à pression à au moins un connecteur de cellule (35, 36) d'une autre cellule de batterie (2).

8. Utilisation d'une cellule de batterie (2) selon l'une des revendications 1 à 6 et/ou utilisation d'un module de batterie (5) selon la revendication 7, dans un véhicule électrique (EV), dans un véhicule électrique hybride (HEV), dans un véhicule hybride rechargeable (PHEV) ou fixe.
